# EUROPEAN PATENT SPECIFICATION

(11) **EP 2 816 737 B1**
(45) Date of publication and mention of the grant of the patent: **01.06.2016**
(21) Application number: 13368019.9
(22) Date of filing: 19.06.2013
(51) Int. Cl.: H04B 5/00, H04W 12/00

(54) **Secure near field communication**
Sichere Nahfeldkommunikation
Communication de champ proche sécurisée

(43) Date of publication of application: 24.12.2014
(73) Proprietor: ST-Ericsson SA, 1228 Plan-les-Ouates (CH)
(72) Inventor: Dhayni, Achraf, 06220 Vallauris (FR)
(74) Representative: Hutchinson, Thomas Owen

(56) References cited:
- EP-A1- 2 816 736
- US-A1- 2009 041 241
- US-A1- 2010 291 871
- US-A1- 2012 071 089
- US-A1- 2013 130 614

## Description

This invention relates to secure Near Field Communication (NFC) and in particular, to a method of masking the magnetic field between two or more Near Field Communications (NFC) devices operating in a secure connection mode. More specifically, but without limitation thereto, the invention relates to an apparatus and method for masking the magnetic field modulation for a secure NFC communication and for simplifying powered-by-the-field (PBF) devices.

NFC is a technique that is becoming more and more widespread because it provides the convenience of enabling devices to communicate with one another wirelessly over a short range. The short-range nature of NFC inherently lends itself to secure data exchanges, for example, between NFC-enabled credit/debit cards and POS devices because it is possible, via physical means, to prevent unauthorised NFC-enabled devices from coming into range of the POS or credit/debit card. As a result, NFC-enabled technology is nowadays being incorporated into mobile phones and other portable devices, for example, as NFC emulators etc.

Nevertheless, as NFC technology is becoming more and more widespread, so too is the prevalence of so-called "NFC hacking devices" that can covertly listen-in on NFC exchanges. An NFC hacking device exploits the fact that when two or more NFC devices communicate over the air, it is possible for the "hacking" device to detect the connection parameters and security keys that are exchanged between the pair of NFC devices, which enables the hacking device to subsequently listen-in on the data exchange.

Specifically, to hack an NFC exchange, a spy-coil can be placed between the Reader and Tag (or tag emulator) antennas so that the spy-coil can read the magnetic signal sent by the Reader. In this way, it is possible to know everything about the NFC protocol, standard, signal quality, signal level, signal timing, and Reader data.

As a result, it is becoming increasingly difficult to ensure the security of NFC-enabled devices because it is possible, in certain cases, for an unauthorised NFC device to communicate covertly to obtain data from another NFC device, for example, by passing an NFC hacking device close to an unsuspecting user's handbag or wallet, say, to download data from the NFC-enabled cards and devices therein.

Known NFC devices are disclosed in published US patent application numbers US2009/041241 [DOBYNS et al, 12 February 2009] and in US2013/130614 [BUSCH-SORENSEN, 23 May 2013].

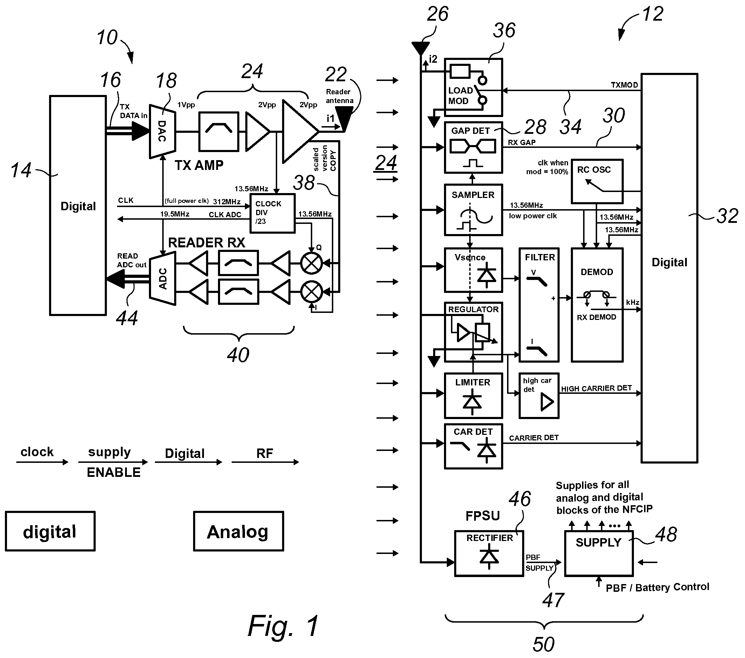

A known NFC communications set-up is illustrated schematically, in Figure 1 of the drawings, which shows how an NFC reader 10 communicates with an NFC tag or NFC tag emulator device 12. The NFC reader 10 comprises a host device or application 14 that sends a digital signal 16to be sent via NFC. The signal 16 is modulated in a Digital-to-Analogue converter 18 before being amplified in an amplifier 20, and sent to the reader's antenna 22. The modulated current in the antenna 22 sets-up an AM modulated field 24 (typically, an AM modulated sinusoidal carrier at 13.56MHz and amplitude between 0.5 and 7.5 A/m), which in turn induces a current in the tags' antenna 26. The induced current is demodulated in a demodulator 28 and the received signal 30 sent to the hardware or application 32 of the tag 12.

According to the commands and information received 30, the tag 12 responds 34 to the reader 10, at which point the reader 10 stops AM modulating the magnetic field 24, so the magnetic field 24 becomes un-modulated.

Rather than transmitting a response directly, the target device, tag or tag emulator 12 load-modulates the unmodulated magnetic field 24 of the reader 12 by changing the load across the terminals of the tag's antenna 26. This is accomplished, as shown in Figure 1, by a load modulator 36: by changing the load across the tag's antenna 26, the output impedance of the reader's antenna 22 changes due to the magnetic coupling between the two antennas 22, 26 (effectively an air-core transformer). This coupling causes a change in the current flowing through the reader's antenna 22, which change can be detected by the reader device 10. As such, the tag device 12 can send data 34 to the reader device by load modulation to the antenna current of the reader 10.

A scaled copy 38 of this current is generated by the reader 10 and injected to the reader's receiver 40, where it can be converted back to digital in a Digital-to-Analogue (DAC) converter 42 and sent 44 back to the host device or application 14.

In a battery mode, the tag or tag emulator 12 digital and analog circuits are powered by an external power supply, such as the battery of a mobile telephone handset (in the case of NFC on a mobile phone). Alternatively, the tag or tag emulator 12 can be operated in a Powered-By-the-Field (PBF) mode, whereby the tag 12 harvests energy from the magnetic field 24 emitted by the reader's antenna 22. Power harvesting occurs by using a rectifier to transform the induced current in the tag's antenna 26 into a DC voltage 48, which can then be regulated by a power supply unit 48.

In PBF mode, a Field Power Supply Unit (FPSU) 50 is used, which comprises the rectifier 46 and the power supply unit 48 previously described. The output of the FPSU 50 is used to provide the power for the analog and digital circuits of the tag 12.

However, whilst the tag 12 is receiving commands and information from the reader 10, the antenna 26 current of the tag 12 device is modulated because the reader 10 is, at that time, AM modulating the magnetic field 24. This modulation makes it difficult for the FPSU 50 to generate the necessary constant DC output 47 (high load modulation frequency components will appear on the DC output 47) and consequently on the supply signals generated by the power supply unit 48, which can be harmful to the functionality of the tag's digital and analog circuits.

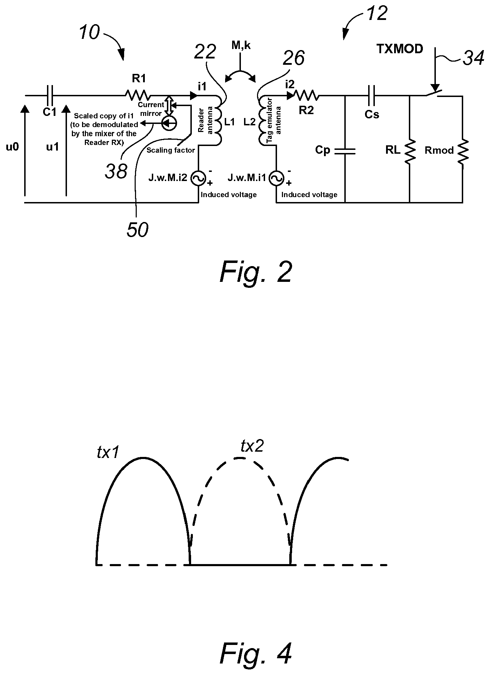

In essence, therefore, the existing NFC set-up is essentially an air-core transformer with the reader's antenna 22 and the tag's antenna 26 forming the "coils" of the transformer, and this can be represented, schematically, in Figure 2 of the drawings. In Figure 2, the eequivalent circuit model of the reader-to-tag coupling is shown where:
Cp and Cs are the components of the tag matching circuit;
RL and RL and Rmod are, respectively, the tag loading without and with load modulation;
The scaling factor 50 is there to control the gain of the current mirror that generates the scaled copy 38 of the current of the reader's antenna 22;
M is the mutual inductance between the two antennas 22, 26;
K is the coupling factor (a function of M) between the two antennas 22, 26;
The induced voltages at both sides are function of the mutual impedance M;
R1 and R2 are the parasitic resistances of the reader's antenna 22 and the tag's antenna 26, respectively; and
TXMOD is the digital data to be transmitted from the tag 12 to the reader 10 via load modulation.

According to Figure 2, the tag 12 (or "transponder"), which is inductively coupled to the reader 10, alters its impedance. This impedance change alters currents and voltages at the reader's antenna 22 and thus the signal TXMOD can be detected by the reader 10.

The invention aims to overcome one or more of the problems identified above, and/or to provide an improved and/or alternative means for providing NFC communications, such as secure NFC communications.

Various aspects of the invention are set forth in the appendant claims.

Suitably, to a hacking NFC device, the masked AM modulated field between the NFC target device and the NFC reader appears to be unmodulated. An apparently unmodulated AM magnetic field suitably appears, to an NFC hacking device, to contain no data. As such, because the magnetic field appears to be unmodulated, a spy coil of an NFC hacking device would not be expected to be capable of hacking the reader and/or target NFC device.

The NFC target device can be an NFC tag, an NFC tag emulator and/or an NFC emulation mode of the NFC IP.

By masking the modulation of the AM modulated field, several possible advantages may arise, such as:
guaranteeing the security of an NFC exchange, even in the absence of cryptography, which may reduce or eliminate the need for time- and power-consuming cryptographic protocols that are hitherto necessary to assure the security of an NFC data exchange; and
simplification of the design of the FPSU module of the target NFC device that is used to harvest power from the field emitted by the reader device when operating in a PBF mode of operation.

As such, the invention suitably provides a mechanism for transmitting NFC data in a manner that appears to occur via an unmodulated magnetic field, which may have security and implementation simplification benefits whilst maintaining backward compatibility with the existing systems in which data transmission occurs by modulating the magnetic field.

Masking of the modulation of the magnetic field is suitably achieved using a Special Purpose Current Regulator Loop (SPCRL) on, or associated with, the NFC target device, or tag. The role of the SPCRL is suitably to permit the target NFC device to exercise a dynamic load-modulation on the magnetic field such that this load-modulation instantaneously cancels out the AM modulation of the reader NFC device. In this way, the magnetic field appears to be an unmodulated 13.56MHz carrier, and the AM modulating signal, which contains the commands and information of the nearby reader device, appears in the current regulating signal of the SPCRL in the NFC target device.

An embodiment of the invention shall now be described, by way of example only, with reference to the accompanying drawings, in which:
Figure 1 is a schematic diagram of a known NFC setup;
Figure 2 is an equivalent air-core transformer circuit of the NFC setup of Figure 1;
Figure 3 is a schematic system diagram showing the modifications to the NFC setup of Figure 2 to achieve the invention; and
Figure 4 is a schematic representation of the clamped tx1 and tx2 waveforms of Figure 3.

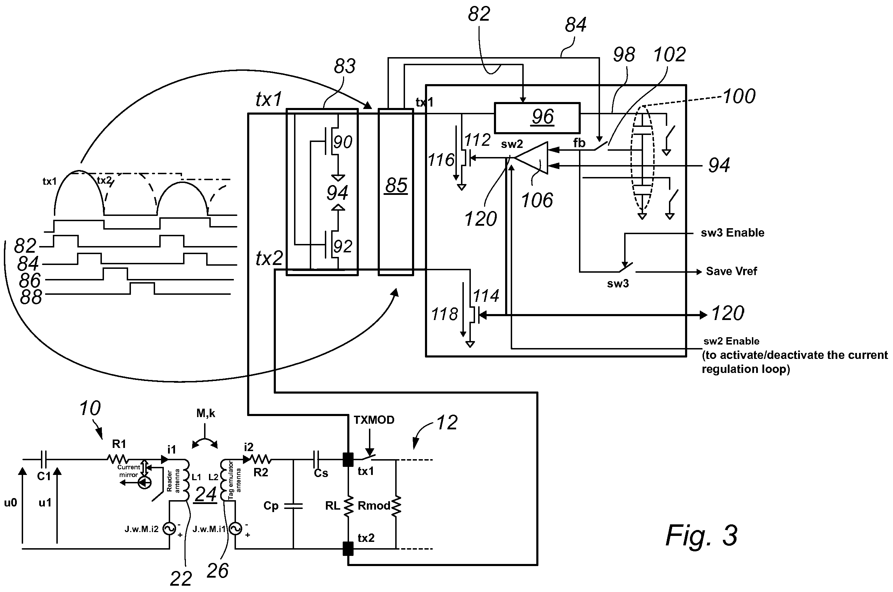

In Figure 3, an equivalent circuit model of the reader 10-to-tag 12 according to the invention is broadly similar to that show in in Figure 2. However, the invention includes a Special Purpose Current Regulator Loop (SPCRL) 80, whereby points tx1 and tx2 are negatively clamped.

From the negatively clamped version of tx1 and tx2, a classical zero-crossing function is used to generate four 25% duty cycle clocks 82, 84, 86, 88, each shifted by 91 degrees, with clocks 82 and 84 being used for the design of the sampling circuit of a current regulator.

The antenna signals tx1 and tx2 are referenced to the substrate (e.g. ground) by means of the main clamp large transistors 90 and 92, which connect: tx1 to 94 when tx2 is high (i.e. above a MOS threshold voltage); and tx2 to 94 when tx1 is high (i.e. above a MOS threshold voltage). The resulting waveforms are shown in Figure 4.

Referring to Figure 3, the mode of current regulation is as follows:
Firstly, a reference voltage value 94 is calculated and saved in memory. The reference voltage 94 is a scaled-down peak value that corresponds to the case when the unmodulated reader field is present at the terminal of target NFC device's antenna 26. A peak detector 96 is then used to sample the tx1 peak voltage using a switch clocked synchronously with clock 82. The tx1 peak voltage 98 is then capacitively divided 100 to generate 102.

Then, using a switch 104 clocked synchronously with clock 84, to hold this divided sample at a value, which is an input to an error amplifier 106, which compares 100 with a reference voltage of 1.2V generated by the band gap block of the regulator.

The error amplifier's output 108 is sent, via a second switch 110 to the gates of the large shunt transistors 112 and 114, the second switch 110 being needed to disable the shunt regulation during load-modulation.

As such, during AM modulation, at each time the peak level of the received signal changes from the peak level of the unmodulated field situation (i.e. the unscaled version of 94), the following happens:

An error signal arises at the output 108 of the error amplifier 106, which error signal 108 is proportional to the percentage by which the received peak is different to the un-scaled version of 94. The error signal 108 gates each shunt transistor 112, 114 to modify the shunt transistor loading and thus keep the shunt current 116, 118 constant. This load modification (or "load-modulation") compensates, or cancels-out, the AM modulation. The AM modulating signal of the reader 12 is, however, detected from the current regulating signal 120 in the target device 12.

As such, the invention provides the means to transmit NFC data without, apparently, modulating the magnetic field, which can simplify the power harvesting of the NFC target device 12 (as the filed appears constant, i.e. not undulated by the data carried thereon) and allows the generation of a clean PBF supply for the target NFC device's analogue and digital circuits. Moreover, because the magnetic field appears to be unmodulated, that is to say, devoid of data, it is inherently impossible for a hacking NFC to listen-in on the NFC communication. Moreover, the invention is backward-compatible as the invention is based on the existing NFC circuitry, and so the Special Purpose Current Regulator Loop can be added to an existing NFC hardware implementation. Specifically, because existing NFC hardware implementations already contain a negative clamper, a zero-crossing clock generator, and a regulator, it is possible to re-implement these functions in accordance with the invention with a negligible overhead.

## Claims

1. An NFC target device (12) comprising means (80) for masking the modulation of an AM modulated field (24) between the NFC target device (12) and an NFC reader (10), **characterised by**: the means (80) for masking the modulation comprises a Current Regulator Loop comprising a clamping device (83) operatively connected to the terminals of an antenna (26) of the target NFC device (12); and means (85) for generating four 25% duty cycle clocks (82, 84, 86, 88) each shifted by 91 degrees.

2. An NFC target device (12) as claimed in claim 1, wherein the NFC target device comprises any one or more of the group comprising: an NFC tag; an NFC tag emulator; and an NFC emulation mode of an NFC IP.

3. An NFC target device (12) as claimed in claim 1 or claim 2, wherein the Current Regulator Loop is configured such that the NFC target device (12) exercises a dynamic load-modulation on the magnetic field (24) such that the dynamic load-modulation instantaneously cancels out the AM modulation of the reader NFC device (10).

4. An NFC target device (12) as claimed in any preceding claim, wherein the clamping device (83) is a negative clamping device (83).

5. An NFC target device (12) as claimed in any preceding claim, further comprising a peak detector (96) for sampling a peak voltage at the antenna (26) using a switch clocked synchronously with a first one of the clocks (82).

6. An NFC target device (12) as claimed in any preceding claim, further comprising a capacitive divider for generating a divided output signal (102).

7. An NFC target device (12) as claimed in claim 6, further comprising a switch (104) clocked synchronously with a second one of the clocks (84), to hold the divided sample (102) at a value being an input to an error amplifier (106).

8. An NFC target device (12) as claimed in claim 6, wherein the error amplifier (106) is adapted to compare (100) with a reference voltage to provide an output (108) sent, via a second switch (110) to the gates of a pair of shunt transistors (112, 114), the second switch (110) being configured to disable shunt regulation during load-modulation.

9. An NFC method in which the modulation of an AM modulated field (24) between an NFC target device (12) and an NFC reader (10) is masked **characterised by**: masking the modulation using a Current Regulator Loop comprising a clamping device (83) operatively connected to the terminals of an antenna (26) of the target NFC device (12); and by generating four 25% duty cycle clocks (82, 84, 86, 88) each shifted by 91 degrees.

10. An NFC method as claimed in claim 9, wherein the masked AM modulated field between the NFC target device (12) and the NFC reader device (10) appears to be unmodulated.

11. An NFC method as claimed in claim 9 or claim 10, wherein masking occurs by instantaneously applying a load at an antenna (26) of the target NFC device (12) corresponding to the modulation of the received signal from the NFC reader device (10).

12. An NFC method according to claim 11, comprising the steps of: calculating and saving a reference voltage value (94) being a scaled-down peak value corresponding to the unmodulated field (24) of the NFC reader (10); and, during AM modulation of the field (24), generating an error signal (108) that gates a shunt transistor (112, 114) to modify the shunt transistor loading and thus keep the shunt current (116, 118) constant.

13. An NFC method as claimed in claim 12, wherein the modulation of the field (24) is detected by monitoring a current regulating signal (120) in the target device (12).

14. An NFC method according to any of claims 9 to 13 executed on an NFC target device (12) according to any of claims 1 to 8.

## Patentansprüche

1. NFC-Targetgerät (12), umfassend eine Einrichtung (80) zum Maskieren der Modulation eines AM-modulierten Felds (24) zwischen dem NFC-Targetgerät (12) und einem NFC-Leser (10), **dadurch gekennzeichnet, dass** die Einrichtung (80) zum Maskieren der Modulation eine Stromreglerschleife, umfassend eine Klemmvorrichtung (83), welche funktionsmäßig mit den Anschlüssen einer Antenne (26) des NFC-Targetgeräts (12) verbunden ist; und eine Einrichtung (85) zum Erzeugen von vier 25 %-Arbeitszyklustakten (82,84, 86, 88) umfasst, welche jeweils um 91 Grad verschoben sind.

2. NFC-Targetgerät (12) nach Anspruch 1, wobei das NFC-Targetgerät eines oder mehrere der Gruppe umfasst, welche umfasst: ein NFC-Etikett; einen NFC-Etikett-Emulator und einen NFC-Emulationsmodus eines NFC-IP.

3. NFC-Targetgerät (12) nach Anspruch 1 oder Anspruch 2, wobei die Stromreglerschleife derart konfiguriert ist, dass das NFC-Targetgerät (12) derart eine dynamische Lastmodulation auf das Magnetfeld (24) ausübt, dass die dynamische Lastmodulation die AM-Modulation des NFC-Lesergeräts (10) unmittelbar aufhebt.

4. NFC-Targetgerät (12) nach einem vorhergehenden Anspruch, wobei die Klemmvorrichtung (83) eine negative Klemmvorrichtung (83) ist.

5. NFC-Targetgerät (12) nach einem vorhergehenden Anspruch, ferner umfassend einen Spitzenwertdetektor (96) zum Abtasten einer Spitzenspannung an der Antenne (26) unter Verwendung eines Schalters, welcher synchron zu einem ersten der Takte (82) getaktet ist.

6. NFC-Targetgerät (12) nach einem vorhergehenden Anspruch, ferner umfassend einen kapazitiven Teiler zum Erzeugen eines geteilten Ausgangssignals (102).

7. NFC-Targetgerät (12) nach Anspruch 6, ferner umfassend einen Schalter (104), welcher synchron zu einem zweiten der Takte (84) getaktet ist, um den geteilten Abtastwert (102) auf einem Wert zu halten, der ein Eingang in einen Fehlerverstärker (106) ist.

8. NFC-Targetgerät (12) nach Anspruch 6, wobei der Fehlerverstärker (106) so ausgelegt ist, dass er einen Vergleich (100) mit einer Referenzspannung durchführt, um einen Ausgang (108) bereitzustellen, welcher über einen zweiten Schalter (110) zu den Gates eines Paares von Shunt-Transistoren (112, 114) gesendet wird, wobei der zweite Schalter (110) so konfiguriert ist, dass er eine Shunt-Regelung während der Lastmodulation aussetzt.

9. NFC-Verfahren, bei welchem die Modulation eines AM-modulierten Felds (24) zwischen einem NFC-Targetgerät (12) und einem NFC-Leser (10) maskiert wird, **gekennzeichnet durch:** Maskieren der Modulation unter Verwendung einer Stromreglerschleife, welche eine Klemmvorrichtung (83) umfasst, die funktionsmäßig mit den Anschlüssen einer Antenne (26) des NFC-Targetgeräts (12) verbunden ist; und **durch** Erzeugen von vier 25 %-Arbeitszyklustakten (82, 84, 86, 88), welche jeweils um 91 Grad verschoben sind.

10. NFC-Verfahren nach Anspruch 9, wobei das maskierte AM-modulierte Feld zwischen dem NFC-Targetgerät (12) und dem NFC-Lesergerät (10) unmoduliert erscheint.

11. NFC-Verfahren nach Anspruch 9 oder Anspruch 10, wobei das Maskieren durch ein unmittelbares Anlegen einer Last an einer Antenne (26) des NFC-Targetgeräts (12) entsprechend der Modulation des von dem NFC-Lesergerät (10) empfangenen Signals erfolgt.

12. NFC-Verfahren nach Anspruch 11, umfassend die Schritte: Berechnen und Speichern eines Referenzspannungswerts (94), der ein herabskalierter Spitzenwert entsprechend dem unmodulierten Feld (24) des NFC-Lesers (10) ist; und, während der AM-Modulation des Felds (24), Erzeugen eines Fehlersignals (108), welches einen Shunt-Transistor (112, 114) ansteuert, um die Shunt-Transistorlast zu modifizieren und somit den Shunt-Strom (116, 118) konstant zu halten.

13. NFC-Verfahren nach Anspruch 12, wobei die Modulation des Felds (24) durch ein Überwachen eines Stromregelungssignals (120) in dem Targetgerät (12) erfasst wird.

14. NFC-Verfahren nach einem der Ansprüche 9 bis 13, ausgeführt auf einem NFC-Targetgerät (12) nach einem der Ansprüche 1 bis 8.

## Revendications

1. Dispositif cible NFC (12) constitué d'un moyen (80) de masquage de la modulation d'un champ modulé AM (24) entre le dispositif cible NFC (12) et un lecteur NFC (10), **caractérisé par :** le moyen (80) de masquage de la modulation comprend une boucle régulatrice de courant constituée d'un dispositif de calage (83) connecté de manière fonctionnelle aux bornes d'une antenne (26) du dispositif cible NFC (12) ; et un moyen (85) de génération de quatre horloges à rapport cyclique de 25 % (82, 84, 86, 88) décalées chacune de 91 degrés.

2. Dispositif cible NFC (12) selon la revendication 1, dans lequel le dispositif cible NFC comprend l'un quelconque ou plusieurs éléments du groupe constitué de : une étiquette NFC ; un émulateur d'étiquette NFC ; et un mode d'émulation NFC d'un IP NFC.

3. Dispositif cible NFC (12) selon la revendication 1 ou 2, dans lequel la boucle régulatrice de courant est configurée de sorte que le dispositif cible NFC (12) exerce une modulation de charge dynamique sur le champ magnétique (24) de sorte que la modulation de charge dynamique annule instantanément la modulation AM du dispositif lecteur NFC (10).

4. Dispositif cible NFC (12) selon l'une quelconque des revendications précédentes, dans lequel le dispositif de calage (83) est un dispositif de calage (83) négatif.

5. Dispositif cible NFC (12) selon l'une quelconque des revendications précédentes, comprenant en outre un détecteur de crêtes (96) destiné à échantillonner une tension de crête au niveau de l'antenne (26) en utilisant un commutateur cadencé de manière synchrone avec une première des horloges (82).

6. Dispositif cible NFC (12) selon l'une quelconque des revendications précédentes, comprenant en outre un diviseur de capacité pour la génération d'un signal de sortie divisé (102).

7. Dispositif cible NFC (12) selon la revendication 6, comprenant en outre un commutateur (104) cadencé de manière synchrone avec une deuxième des horloges (84), afin de maintenir l'échantillon divisé (102) à une valeur étant une entrée d'un amplificateur d'erreur (106).

8. Dispositif cible NFC (12) selon la revendication 6, dans lequel l'amplificateur d'erreur (106) est adapté pour comparer (100) avec une tension de référence afin de fournir une sortie (108) envoyée, via un second commutateur (110) aux portes d'une paire de transistors de dérivation (112, 114), le second commutateur (110) étant configuré pour désactiver la régulation de dérivation pendant la modulation de charge.

9. Procédé NFC dans lequel la modulation d'un champ modulé AM (24) entre un dispositif cible NFC (12) et un lecteur NFC (10) est masquée, **caractérisé par :** le masquage de la modulation à l'aide d'une boucle régulatrice de courant constituée d'un dispositif de calage (83) connecté de manière fonctionnelle aux bornes d'une antenne (26) du dispositif cible NFC (12) ; et par la génération de quatre horloges à rapport cyclique de25 % (82, 84, 86, 88) décalées chacune de 91 degrés.

10. Procédé NFC selon la revendication 9, dans lequel le champ modulé AM masqué entre le dispositif cible NFC (12) et le dispositif lecteur NFC (10) s'avère ne pas être modulé.

11. Procédé NFC selon la revendication 9 ou 10, dans lequel le masquage se produit en appliquant instantanément une charge au niveau d'une antenne (26) du dispositif cible NFC (12) correspondant à la modulation du signal reçu du dispositif lecteur NFC (10).

12. Procédé NFC selon la revendication 11, comprenant les étapes de : calcul et enregistrement d'une valeur de tension de référence (94) étant une valeur de crête réduite correspondant au champ non modulé (24) du lecteur NFC (10) ; et, pendant la modulation AM du champ (24), la génération d'un signal d'erreur (108) qui déclenche un transistor de dérivation (112, 114) afin de modifier la charge du transistor de dérivation et ainsi de maintenir le courant de dérivation (116, 118) constant.

13. Procédé NFC selon la revendication 12, dans lequel la modulation du champ (24) est détectée par la surveillance d'un signal de régulation de courant (120) dans le dispositif cible (12).

14. Procédé NFC selon l'une quelconque des revendications 9 à 13, exécuté sur un dispositif cible NFC (12) selon l'une quelconque des revendications 1 à 8.
